# EUROPÄISCHE PATENTSCHRIFT

(11) **EP 1 892 199 B1**
(45) Veröffentlichungstag und Bekanntmachung des Hinweises auf die Patenterteilung: **02.12.2009**
(21) Anmeldenummer: 07013691.6
(22) Anmeldetag: 12.07.2007
(51) Int. Cl.: B65D 85/804

(54) **System mit einer Brühmaschine und einer Portionskapsel**
System with a brewing machine and a portion capsule
Système doté d'une machine chauffante et d'une capsule de portion

(30) Priorität: 25.08.2006 DE 202006013189 U
(43) Veröffentlichungstag der Anmeldung: 27.02.2008
(73) Patentinhaber: Tchibo GmbH, 22297 Hamburg (DE)
(72) Erfinder: Ternité, Rüdiger, 21149 Hamburg (DE)
(74) Vertreter: UEXKÜLL & STOLBERG

(56) Entgegenhaltungen:
- EP-A- 1 579 792
- WO-A-00/56629

## Beschreibung

Die Erfindung betrifft ein System mit einer Brühmaschine und einer Portionskapsel sowie eine zugehörige Portionskapsel.

Aus der DE 10 2004 056 224 A1 ist ein System mit einer Brühmaschine .und einer Portionskapsel bekannt. Die Brühmaschine ist zum Fertigen eines heißen Getränks, insbesondere eines Kaffeegetränks, mittels einer Portiönskapsel mit einem Kapseldeckel und einem Kapselboden eingerichtet und weist eine Druckwassereinrichtung (mit einem Wasservorratsbehälter, einer Förderpumpe, einem Boiler und einer Brühkammer), einen Portionskapselhalter (der auch Teile der Brühkammer enthält) und eine Steuerung auf. Dem Portionskapselhalter sind zwei relativ zueinander bewegbare Aufstechmittel (oberer Dorn und unterer Dorn) zugeordnet, mit deren Hilfe heißes Wasser durch den Kapseldeckel in den Innenraum der Portionskapsel und das fertige Getränk durch den Kapselboden aus der Portionskapsel gelangen kann.

Bei Benutzung der vorbekannten Brühmaschine wird zunächst eine Portionskapsel, die im Lieferzustand allseitig geschlossen ist und eine Getränkesubstanz, insbesondere Mahlkaffee, enthält, in den Portionskapselhalter bzw. die Brühkammer eingelegt. Beim Schließen der Brühkammer durchsticht der obere Dorn den Kapseldeckel. Je nach Druckaufbau in der Portionskapsel durchstößt der untere Dorn den Kapselboden entweder bereits beim Schließen der Brühkammer oder sonst während des Brühvorgangs. Die Pumpe fördert heißes Wasser in die Portionskapsel, das die Portionskapsel nach der Extraktion des Kaffeemehls als gebrauchsfertiges Kaffeegetränk durch den unteren Dorn (der bei der vorbekannten Brühmaschine als Hohldorn ausgestaltet ist) wieder verlässt. Nach Beendigung des Brühvorgangs wird die Brühkammer wieder geöffnet, so dass die Portionskapsel vom Benutzer entnommen werden kann. Dabei ist die in der Portionskapsel enthaltene Restflüssigkeit von dem extrahierten Kaffeemehl weitgehend gebunden (feuchter Kaffeesatz), so dass man die Portionskapsel entnehmen kann, ohne dass dabei Flüssigkeit aus dem Kapselboden tropft.

Im Prinzip ist die vorbekannte Brühmaschine auch zum Zubereiten anderer Getränke als Kaffee geeignet, z.B. von heißem Kakao oder heißer Milch. In diesem Fall werden Portionskapseln benutzt, die z.B. mit Kakaopulver oder Milchpulver oder mit Flüssigkonzentrat von Kakao oder Milch gefüllt sind. Wenn nun, wie zuvor anhand der Verwendung von Portionskapseln mit Kaffee erläutert, eine Portionskapsel in die Brühkammer eingelegt, die Brühkammer geschlossen und der Brühvorgang durchgeführt wird, wird die Portionskapsel am Kapseldeckel und am Kapselboden angestochen. Die Pumpe fördert zur Herstellung des Getränks heißes Wasser in die Portionskapsel, wodurch das darin enthaltene Konzentrat gelöst oder verdünnt wird und als gebrauchsfertiges Getränk die Brühkammer über den Hohldorn an der Unterseite verlässt. Zur Beendigung des Vorgangs wird die Pumpe abgeschaltet. Das restliche heiße Wasser verbleibt auch nach dem Abschalten der Pumpe in der Portionskapsel, solange die Brühkammer luftdicht verschlossen ist. Bei der vorbekannten Brühmaschine wird nämlich ein Ausfließen der Portionskapsel dadurch verhindert, dass weder aus dem hydraulischen System (das den Wassertank, die Pumpe, den Boiler und ein Ventil aufweist), noch aus der Umgebung Luft in die Portionskapsel nachströmen kann. Sobald jedoch die Brühkammer geöffnet wird, um die verbrauchte Portionskapsel zu entnehmen, strömt durch den sich öffnenden Spalt zwischen der Brühkammer und ihrem Deckel Luft nach, die Portionskapsel wird dabei belüftet, und das gegebenenfalls noch heiße Wasser kann aus der Portionskapsel ausfließen und dabei die Umgebung verschmutzen oder gar den Benutzer gefährden.

Die WO 00/56629 A zeigt eine Portionskapsel, die im Bodenbereich eine Einrichtung aufweist, die nach dem Öffnen der Kapsel Feststoffe in der Kapsel zurückhalten soll. Diese Einrichtung kann aus einem Gewebe oder einem Schaumstoff bestehen oder als Ventileinrichtung ausgebildet sein.

Es ist Aufgabe der Erfindung, ein System mit der vorbekannten Brühmaschine und einer Portionskapsel neuen Nutzungsmöglichkeiten zuzuführen, insbesondere wenn die Pörtionskapsel keine wasserbindende Getränkesubstanz enthält, und die aus WO 00/56629 A bekannte Portionskapsel zu verbessern.

Diese Aufgabe wird gelöst durch ein System mit einer Brühmaschine und einer Portionskapsel mit den Merkmalen des Anspruchs 1. Der Anspruch 14 ist direkt auf die Portionskapsel gerichtet. Vorteilhafte Ausgestaltungen der Erfindung ergeben sich aus den Unteransprüchen.

Das erfindungsgemäße System weist eine: Brühmaschine und eine Portionskapsel auf. Die Brühmaschine ist zum Fertigen eines heißen Getränks mittels einer Portionskapsel mit einem Kapseldeckel und einem Kapselboden eingerichtet und weist eine Druckwassereinrichtung, einen Portionskapselhalter und eine Steuerung auf. Dem Portionskapselhalter sind zwei relativ zueinander bewegbare Aufstechmittel zugeordnet, die dazu eingerichtet sind, beim oder nach dem Einsetzen der Portionskapsel in den Portionskapselhalter den Kapseldeckel sowie den Kapselboden zu durchstoßen, so dass heißes Wasser durch den Kapseldeckel in den Innenraum der Portionskapsel und Getränk durch den Kapselboden aus der Portionskapsel gelangen kann. Eine derartige Brühmaschine ist z.B. in der DE 10 2004 056 224 A1 im Einzelnen offenbart, wie oben erläutert.

Die Portionskapsel des erfindungsgemäßen Systems ist im Lieferzustand allseitig geschlossen und enthält eine Getränkesubstanz. Der Kapselboden ist dazu eingerichtet, sich beim Herausziehen des dem Kapselboden zugeordneten Aufstechmittels aus dem Kapselboden wieder zu schließen. Zu diesem Zweck weist der Kapselboden eine Weichstoffscheibe auf, und zwar aus Silikon (vorzugsweise einem peroxidfreien Vollsilikon), Silikonkautschuk, Gummi, Kautschuk oder synthetischem Kautschuk.

Wenn die Portionskapsel des erfindungsgemäßen Systems in der zuvor erläuterten Weise benutzt wird, durchstößt der untere Dorn den Kapselboden und dabei die Weichstoffscheibe. Nachdem der Brühvorgang beendet ist, wird die Brühkammer geöffnet, um die verbrauchte Portionskapsel zu entnehmen. Dabei ziehen sich der obere Dorn und der untere Dorn aus der Portionskapsel zurück. Trotz der Belüftung durch das von dem oberen Dorn im Kapseldeckel gebildete Loch tritt keine Flüssigkeit aus der Portionskapsel aus, da sich der Kapselboden wegen der Materialeigenschaften der Weichstoffscheibe selbsttätig wieder abdichtet. Denn das Material der Weichstoffscheibe geht in seine Ausgangsstellung zurück und verschließt dabei das von dem unteren Dorn geschaffene Loch im Kapselboden. Je nach den Eigenschaften der Weichstoffscheibe, insbesondere dem Rückstellverhalten des Materials, ist das Loch bereits abgedichtet, bevor der untere Dorn vollständig aus der Weichstoffscheibe herausgezogen ist. Die Portionskapsel kann daher gefahrlos entnommen und entsorgt werden, ohne dass dabei die Umgebung verschmutzt wird.

Es gibt verschiedene Möglichkeiten, die Weichstoffscheibe an der Portionskapsel anzubringen. So kann der Kapselboden durch die Weichstoffscheibe gebildet sein. Oder der Kapselboden weist eine Folie auf, an der die Weichstoffscheibe befestigt ist. Bei einer bevorzugten Ausführungsform sind eine Bodenstruktur und eine Seitenwandung der Portionskapsel einstückig miteinander ausgebildet, vorzugsweise als Spritzteil oder als Tiefziehteil, wobei die Weichstoffscheibe an der Bodenstruktur befestigt ist.

Die Weichstoffscheibe kann angeklebt, oder angeschweißt oder auch von einer Haltestruktur gehalten sein. Die letztere Möglichkeit ist besonders vorteilhaft, wenn Klebeverbindungen wegen der Art der verwendeten Materialien problematisch sind.

Beispiele für Haltestrukturen sind eine Trägerscheibe, vorzugsweise mit einer zentralen Öffnung, die die Weichstoffscheibe am Kapselboden hält, sowie eine Haltestruktur mit zwei Trägerscheiben, vorzugsweise jeweils mit einer zentralen Öffnung, zwischen denen die Weichstoffscheibe angeordnet ist. Wenn die Weichstoffscheibe zwischen zwei solchen Trägerscheiben eingeklemmt ist, erübrigt sich wegen der Materialeigenschaften der Weichstoffscheibe eine zusätzliche Abdichtung zwischen den Trägerscheiben und der Weichstoffscheibe.

Die Haltestruktur ist bei bevorzugten Ausführungsformen mit einem Bereich der Portionskapsel verklebt und/oder verschweißt und/oder verschraubt. Dabei werden Klebstoffe benutzt, die mit den verwendeten Materialien der zu verbindenden Teile der Haltestruktur und der Portionskapsel verträglich sind und vorzugsweise auch lebensmitteltauglich sind, z.B. Acrylatkleber.

Bei anderen Ausführungsformen ist die Haltestruktur mit einem Bereich der Portionskapsel verrastet. Dies hat den Vorteil, dass sich Klebeverbindungen ganz erübrigen.

Die Weichstoffscheibe hat vorzugsweise eine Dicke im Bereich von 0,2 mm bis 1,5 mm, vorzugsweise 0,5 mm.

Im Prinzip kann die Portionskapsel des erfindungsgemäßen Systems auch mit herkömmlichen Getränkesubstanzen wie z.B. Kaffeepulver verwendet werden. Die Vorteile der Erfindung kommen dann zum Tragen, wenn die Getränkesubstanz eine Flüssigkeit aufweist und/oder wenn feste Anteile der Getränkesubstanz in Wasser zumindest weitgehend lösbar bzw. dispergierbar sind, wenn also die Getränkesubstanz selbst nicht in der Lage ist, Restflüssigkeit in einer verbrauchten Portionskapsel zurückzuhalten. Bevorzugte Getränkesubstanzen sind Kakaopulver, Schokolade, Kakao-Flüssigkonzentrat, Milchpulver, Milch-Flüssigkonzentrat, Instantsuppe oder auch Mischungen davon.

Im Folgenden wird die Erfindung anhand von Ausführungsbeispielen weiter erläutert. Die Zeichnungen zeigen in
- Figur 1: einen schematischen Längsschnitt durch eine Ausführungsform der erfindungsgemäßen Portionskapsel vor der Perforation durch einen oberen Dorn und einen unteren Dorn einer Brühmaschine,
- Figur 2: einen schematischen Längsschnitt wir in Figur 1 nach der Perforation,
- Figur 3: einen schematischen Längsschnitt wie in Figur 1 und Figur 2 nach dem Zurückziehen des oberen Dorns und des unteren Dorns,
- Figur 4: einen schematischen Längsschnitt durch eine Ausführungsform der erfindungsgemäßen Portionskapsel ähnlich Figur 1,
- Figur 5: einen schematischen Längsschnitt durch eine weitere Ausführungsform der erfindungsgemäßen Portionskapsel und
- Figur 6: einen schematischen Längsschnitt durch eine weitere Ausführungsform der erfindungsgemäßen Portionskapsel.

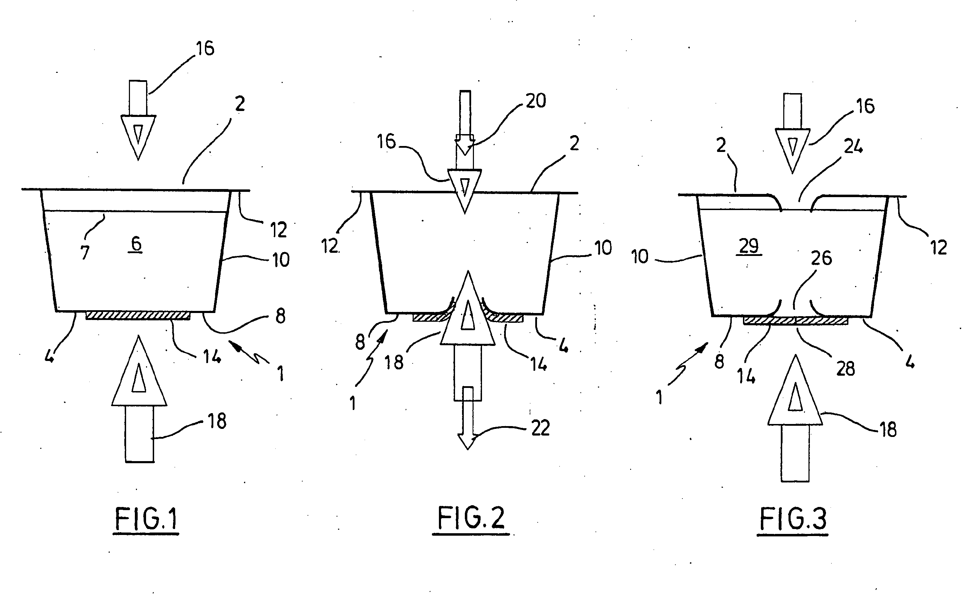

In den Figuren 1 bis 3 ist in schematischer Weise die Funktionsweise einer Portionskapsel 1 in einem System mit einer Brühmaschine und einer Portionskapsel während des Brühvorgangs veranschaulicht. Die Portionskapsel 1 hat einen Kapseldeckel 2 und einen Kapselboden 4 und ist vor der Benutzung allseitig geschlossen. Im Inneren der Portionskapsel 1 befindet sich eine Getränkesubstanz 6, die im Ausführungsbeispiel als Flüssigkonzentrat (z.B. mit Kakao oder Milch) mit einem Pegel 7 dargestellt ist.

Der Kapselboden 4 besitzt im Ausführungsbeispiel eine geschlossene Bodenstruktur 8, die einstückig mit einer Seitenwandung 10 und einem nach außen vorspringenden Flansch 12 im oberen Bereich der Portionskapsel 1 ausgebildet ist, z.B. als Tiefziehteil oder Spritzteil. Der Kapseldeckel 2 ist mit dem Flansch 12 verbunden, z.B. durch Aufsiegeln.

Soweit beschrieben, entspricht der Aufbau der Portionskapsel 1 dem einer herkömmlichen Portionskapsel. Insbesondere kommen alle für Portionskapseln gebräuchlichen Materialien in Frage, z.B. Aluminium oder eine Kunststofffolie für den Kapseldeckel 2 und z.B. Aluminium, Polyester, Polystyrol, Polyethylen, Polypropylen oder auch mehrschichtige Verbundmaterialien für die Bodenstruktur 8, die Seitenwandung 10 und den Flansch 12.

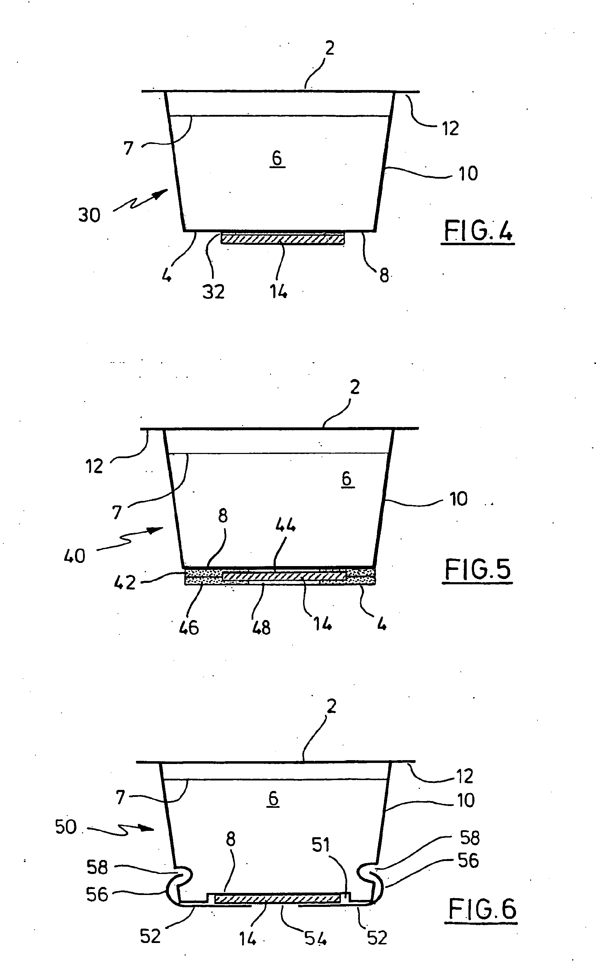

Abweichend von herkömmlichen Portionskapseln ist bei dem Kapselboden 4 auf die Bodenstruktur 8 von außen eine Silikonscheibe 14 aufgebracht und mit der Bodenstruktur 8 verbunden, wie anhand von Figur 4 näher erläutert.

In Figur 1 ist in schematischer Weise dargestellt, wie die Portionskapsel 1 in eine Brühmaschine eingesetzt wird. Die Brühmaschine ist z.B. so konstruiert, wie in der DE 10 2004 056 224 A1 beschrieben, und besitzt einen hier in den Figuren nicht gezeigten Portionskapselhalter, der im Ausführungsbeispiel ein separates Teil ist. Nachdem die Portionskapsel 1 in den Portionskapselhalter eingelegt worden ist, wird der Portionskapselhalter in die Brühmaschine eingeschoben und verriegelt. Bei dem Verriegelungsvorgang hebt sich der Portionskapselhalter mit der Portionskapsel 1, so dass ein als Aufstechmittel dienender oberer Dorn 16 den Kapseldeckel 2 perforiert. Gleichzeitig (oder auch zu Beginn des Brühvorgangs bei einem Druckaufbau innerhalb der Portionskapsel 1) findet eine Relativbewegung zwischen dem Kapselboden 4 und einem unteren Dorn 18 statt, was zur Folge hat, dass der untere Dorn 18 in den Kapselboden 4 eindringt.

In Figur 2 ist der zuletzt beschriebene Zustand dargestellt. Ferner erkennt man, wie während des Brühvorgangs heißes Wasser 20 durch den im Ausführungsbeispiel als Hohldorn dargestellten oberen Dorn 16 in das Innere der Portionskapsel 1 gelangt und die flüssige Getränkesubstanz 6 verdünnt. Bei alternativen Ausgestaltungen der Brühmaschine ist der obere Dorn 16 kein Hohldorn, sondern heißes Wasser gelangt durch die von dem oberen Dorn 16 geschaffene Öffnung im Kapseldeckel 2 ins Innere der Portionskapsel 1. Der Kapseldeckel 2 ist während dieses Vorgangs durch eine umlaufende Dichtung der Brühkammer an seiner Oberseite druckfest gegen die Umgebung abgedichtet.

Man sieht in Figur 2, wie das Getränk 22 - also im Ausführungsbeispiel eine Mischung aus der flüssigen Getränkesubstanz 6 und dem heißen Wasser 20 - die Portionskapsel 1 durch den als Hohldorn gestalteten unteren Dorn 18 verlässt. Innerhalb der Kapsel steigt in dieser Phase der Flüssigkeitspegel bis zum Kapseldeckel 2.

Nach Beendigung des Brühvorgangs soll die verbrauchte Portionskapsel 1 entnommen werden. Dazu wird der Portionskapselhalter entriegelt, und der obere Dorn 16 und der untere Dorn 18 bewegen sich voneinander weg. Dieser Zustand ist in Figur 3 gezeigt.

Der Innenraum der Portionskapsel 1 wird dabei durch die von dem oberen Dorn 16 geschaffene Öffnung 24 belüftet. Die in der Portionskapsel 1 befindliche Restflüssigkeit 29 kann jedoch nicht durch die von dem unteren Dorn 18 erzeugte Öffnung 26 in der Bodenstruktur 8 auslaufen, sondern wird von der Silikonscheibe 14 zurückgehalten. Denn aufgrund der Materialeigenschaften der Silikonscheibe 14 schließt sich die Öffnung in der Silikonscheibe 14 selbsttätig, so dass eine punktartige Verschlussstelle 28 entsteht, durch die die Restflüssigkeit 29 nicht hindurchtreten kann. Die Portionskapsel 1 kann daher bequem entnommen werden, ohne dass dabei Flüssigkeit ausläuft.

Die Portionskapsel 1 ist in Figur 4 genauer dargestellt und hierin mit 30 bezeichnet. Die übrigen Bezugszeichen sind beibehalten.

In dem Ausführungsbeispiel gemäß Figur 4 ist die Silikonscheibe 14 mit einem geeigneten Klebematerial (z.B. einem Acrylatkleber) an der Bodenstruktur 8 des Kapselbodens 4 befestigt. Die Klebeschicht ist mit 32 bezeichnet. Die Silikonscheibe 14 ist in diesem Beispiel 0,5 mm dick und besteht aus peroxidfreiem Vollsilikon.

Je nach Materialwahl lassen sich eine Bodenstruktur 8 und eine Silikonscheibe 14 unter Umständen nicht geeignet miteinander verkleben. So stehen lebensmittelrechtlich unbedenkliche Klebstoffe nicht für alle Materialkombinationen zur Verfügung. In dem Ausführungsbeispiel gemäß Figur 5 ist daher die Silikonscheibe nicht direkt mit der Bodenstruktur verklebt.

Die Figur 5 zeigt eine Portionskapsel 40, die denselben Grundaufbau hat wie die Portionskapsel gemäß Figur 4, weshalb für einander entsprechende Teile auch dieselben Bezugszeichen verwendet werden. Die Silikonscheibe 14 ist zwischen einer ersten Trägerscheibe 42, die eine zentrale Öffnung 44 hat, und einer zweiten Trägerscheibe 46 mit einer zentralen Öffnung 48. eingeklemmt. Zu diesem Zweck besitzen die erste Trägerscheibe 42 und die zweite Trägerscheibe 46 jeweils eine Ringnut, in der die Silikonscheibe 14 liegt. Die beiden Trägerscheiben 42 und 46, die z.B. aus Polyester oder Polypropylen gefertigt sind, sind untereinander in ihren peripheren Randzonen miteinander verklebt. Die Trägerscheibe 42 ist am Rand mit einem geeigneten Klebematerial (z.B. einem Acrylatkleber) an der Bodenstruktur 8 befestigt. Die Wahl der Klebstoffe muss auf die Materialien der Bodenstruktur 8 und der beiden Trägerscheiben 42 und 46 abgestimmt sein. Die Silikonscheibe 14 kommt jedoch nicht mit Klebstoff in Berührung.

Da die Trägerscheiben 42 und 46 jeweils mit einer Öffnung 44 bzw. 48 versehen sind, stören sie nicht, wenn der untere Dorn 18 in die Portionskapsel 40 eindringt. Etwaige Undichtigkeiten der Verklebungen sind ohne Bedeutung, da sie vor der Perforation des Kapselbodens 4 keinen Zugang ins Kapselinnere bilden können und da nach der Perforation durch diese Undichtigkeiten nur geringfügige Mengen an Flüssigkeit auslaufen könnten.

In der Figur 6 ist eine Portionskapsel 50 dargestellt, unter Beibehaltung der Bezugszeichen für die unveränderten Teile, die ganz ohne Klebeverbindungen im Bereich der Silikonscheibe 14 auskommt. Die Silikonscheibe besteht wie in den übrigen Beispielen aus peroxidfreiem Vollsilikon und hat eine Dicke im Bereich von 0,2 bis 1,5 mm, vorzugsweise von 0,5 mm. Die Bodenstruktur 8 des Kapselbodens 4 ist gemäß Figur 6 mit einer Vertiefung 51 versehen, in die die Silikonscheibe 14 von außen eingelegt ist. Die Silikonscheibe 14 wird von einem ringartigen Befestigungsteil 52 gehalten, das in seinem zentralen Bereich eine Öffnung 54 und an seiner Peripherie einen nach innen gewölbten Rand 56 aufweist. Der Rand 56 ist in einer umlaufenden Ringnut 58 verrastet, die im unteren Bereich der Seitenwandung 10 der Portionskapsel 50 vorgesehen ist. Wegen der elastischen Eigenschaften der Silikonscheibe 14 liegt die Silikonscheibe 14 dicht an der Bodenstruktur 8 an. Daher kann im perforierten Zustand, vergleichbar der Darstellung in Figur 3, keine Restflüssigkeit aus der Portionskapsel 50 auslaufen.

Bei Varianten der Portionskapsel gemäß Figur 6 wird ein Befestigungsteil für die Silikonscheibe 14 nicht mit dem Körper der Portionskapsel verrastet, sondern thermisch verschweißt, geklebt oder auch geschraubt.

Die Portionskapseln 1, 30, 40 und 50 haben in den Ausführungsbeispielen einen kreisförmigen Querschnitt.

## Patentansprüche

1. System mit
- einer Brühmaschine,
die zum Fertigen eines heißen Getränks mittels einer Portionskapsel (1; 30; 40; 50) mit einem Kapseldeckel (2) und einem Kapselboden (4) eingerichtet ist und eine Druckwassereinrichtung, einen Portionskapselhalter und eine Steuerung aufweist,
wobei dem Portionskapselhalter zwei relativ zueinander bewegbare Aufstechmittel (16, 18) zugeordnet sind, die dazu eingerichtet sind, beim oder nach dem Einsetzen der Portionskapsel (1; 30; 40; 50) in den Portionskapselhalter den Kapseldeckel (2) sowie den Kapselboden (4) zu durchstoßen, so dass heißes Wasser (20) durch den Kapseldeckel (2) in den Innenraum der Portionskapsel (1; 30; 40; 50) und Getränk (22) durch den Kapselboden (4) aus der Portionskapsel (1; 30; 40; 50) gelangen kann, und
- einer Portionskapsel (1; 30; 40; 50),
mit einem Kapseldeckel (2) und einem Kapselboden (4), die im Lieferzustand allseitig geschlossen ist und eine Getränkesubstanz (6) enthält,
wobei der Kapselboden (4) dazu eingerichtet ist, sich beim oder nach dem Herausziehen des dem Kapselboden (4) zugeordneten Aufstechmittels (18) aus dem Kapselboden (4) wieder zu schließen,
wobei der Kapselboden (4) eine Weichstoffscheibe (14) aufweist und wobei die Weichstoffscheibe (14) eines der aus der folgenden Liste ausgewählten Materialien aufweist: Silikone, peroxidfreie Vollsilikone, Silikonkautschuke, Gummi, Kautschuke, synthetische Kautschuke.

2. System nach Anspruch 1, **dadurch gekennzeichnet, dass** der Kapselboden durch die Weichstoffscheibe gebildet ist.

3. System nach Anspruch 1, **dadurch gekennzeichnet, dass** der Kapselboden eine Folie aufweist, an der die Weichstoffscheibe befestigt ist.

4. System nach Anspruch 1, **dadurch gekennzeichnet, dass** eine Bodenstruktur (8) und eine Seitenwandung (10) der Portonskapsel (1; 30; 40; 50) einstückig miteinander ausgebildet sind, vorzugsweise als Spritzteil oder als Tiefziehteil, und dass die Weichstoffscheibe (14) an der Bodenstruktur (8) befestigt ist.

5. System nach einem der Ansprüche 1 bis 4, **dadurch gekennzeichnet, dass** die Weichstoffscheibe (14) angeklebt oder angeschweißt ist.

6. System nach einem der Ansprüche 1 bis 4, **dadurch gekennzeichnet, dass** die Weichstoffscheibe (14) von einer Haltestruktur (42, 46; 52) gehalten ist.

7. System nach Anspruch 6, **dadurch gekennzeichnet, dass** die Haltestruktur eine Trägerscheibe, vorzugsweise mit einer zentralen Öffnung, aufweist, die die Weichstoffscheibe am Kapselboden hält.

8. System nach Anspruch 6, **dadurch gekennzeichnet, dass** die Haltestruktur zwei Trägerscheiben (42, 46), vorzugsweise jeweils mit einer zentrale Öffnung (44, 48), aufweist, zwischen denen die Weichstoffscheibe (14) angeordnet, vorzugsweise eingeklemmt, ist.

9. System nach einem der Ansprüche 6 bis 8, **dadurch gekennzeichnet, dass** die Haltestruktur (42, 46) mit einem Bereich der Portionskapsel (40) verklebt und/oder verschweiß und/oder verschraubt ist.

10. System nach einem der Ansprüche 6 bis 8, **dadurch gekennzeichnet, dass** die Haltestruktur (52) mit einem Bereich der Portionskapsel (50) verrastet ist.

11. System nach einem der Ansprüche 1 bis 10, **dadurch gekennzeichnet, dass** die Weichstoffscheibe (14) eine Dicke im Bereich von 0,2 mm bis 1,5 mm hat, vorzugsweise 0,5 mm.

12. System nach einem der Ansprüche 1 bis 11, **dadurch gekennzeichnet, dass** die Getränkesubstanz (6) eine Flüssigkeit aufweist und/oder dass feste Anteile der Getränkesubstanz (6) in Wasser zumindest weitgehend lösbar bzw. dispergierbar sind.

13. System nach Anspruch 12, **dadurch gekennzeichnet, dass** die Getränkesubstanz (6) mindestes eine der aus der folgenden Liste ausgewählten Substanzen aufweist: Kakaopulver, Schokolade, Kakao-Flüssigkonzentrat, Milchpulver, Milch-Flüssigkonzentrat, Instantsuppe.

14. Portionskapsel, mit einem Kapseldeckel (2) und einem Kapselboden (4), die im Lieferzustand allseitig geschlossen ist und eine Getränkesubstanz (6) enthält, wobei der Kapselboden (4) dazu eingerichtet ist, sich beim oder nach dem Herausziehen eines durch den Kapselboden (4) gestochenen Aufstechmittels (18) aus dem Kapselboden (4) wieder zu schließen, **dadurch gekennzeichnet, dass** der Kapselboden (4) eine Weichstoffscheibe (14) aufweist, wobei die Weichstoffscheibe (14) eines der aus der folgenden Liste ausgewählten Materialien aufweist: Silikone, peroxidfreie Vollsilikone, Silikonkautschuke, Gummi, Kautschuke, synthetische Kautschuke.

15. Portionskapsel nach Anspruch 14, **dadurch gekennzeichnet, dass** der Kapselboden durch die Weichstoffscheibe gebildet ist.

16. Portionskapsel nach Anspruch 14, **dadurch gekennzeichnet**, das.s der Kapselboden eine Folie aufweist, an der die Weichstoffscheibe befestigt ist.

17. Portionskapsel nach Anspruch 14, **dadurch gekennzeichnet, dass** eine Bodenstruktur (8) und eine Seitenwandung (10) der Portionskapsel (1; 30; 40; 50) einstückig miteinander ausgebildet sind, vorzugsweise als Spritzteil oder als Tiefziehteil, und dass die Weichstoffscheibe (14) an der Bodenstruktur (8) befestigt ist.

18. Portionskapsel nach einem der Ansprüche 14 bis 17, **dadurch gekennzeichnet, dass** die Weichstoffscheibe (14) angeklebt oder angeschweißt ist.

19. Portionskapsel nach einem der Ansprüche 14 bis 17, **dadurch gekennzeichnet, dass** die Weichstoffscheibe (14) von einer Haltestruktur (42, 46; 52) gehalten ist.

20. Portionskapsel nach Anspruch 19, **dadurch gekennzeichnet, dass** die Haltestruktur eine Trägerscheibe, vorzugsweise mit einer zentralen Öffnung, aufweist, die die Weichstoffscheibe am Kapselboden hält.

21. Portionskapsel nach Anspruch 19, **dadurch gekennzeichnet, dass** die Haltestruktur zwei Trägerscheiben (42, 46), vorzugsweise jeweils mit einer zentralen Öffnung (44, 48), aufweist, zwischen denen die Weichstoffscheibe (14) angeordnet, vorzugsweise eingeklemmt, ist.

22. Portionskapsel nach einem der Ansprüche 19 bis 21, **dadurch gekennzeichnet, dass** die Haltestruktur (42, 46) mit einem Bereich der Portionskapsel (40) verklebt und/oder verschweißt und/oder verschraubt ist.

23. Portionskapsel nach einem der Ansprüche 19 bis 21, **dadurch gekennzeichnet, dass** die Haltestruktur (52) mit einem Bereich der Portionskapsel (50) verrastet ist.

24. Portionskapsel nach einem der Ansprüche .14 bis 23, **dadurch gekennzeichnet, dass** die Weichstoffscheibe (14) eine Dicke im Bereich von 0,2 mm bis 1,5 mm hat, vorzugsweise 0,5 mm.

25. Portionskapsel nach einem der Ansprüche 14 bis 24, **dadurch gekennzeichnet, dass** die Getränkesubstanz (6) eine Flüssigkeit aufweist und/oder dass feste Anteile der Getränkesubstanz in Wasser zumindest weitgehend lösbar bzw. dispergierbar sind.

26. Portionskapsel nach Anspruch 25, **dadurch gekennzeichnet, dass** die Getränkesubstanz (6) mindestes eine der aus der folgenden Liste ausgewählten Substanzen aufweist: Kakaopulver, Schokolade, Kakao-Flüssigkonzentrat, Milchpulver, Milch-Flüssigkonzentrat, Instantsuppe.

## Claims

1. System comprising
- a brewing machine for preparing a hot beverage by way of a portioned pod (1; 30; 40; 50) having a pod cover (2) and a pod base (4) and comprising hydraulic means, a portioned pod holder and a control, wherein two piercing means (16, 18) which are movable relative to one another, are associated with the portioned pod holder and are configured to pierce the pod cover (2) and the pod base (4) either when or after the portioned pod (1; 30; 40; 50) is inserted into the portioned pod holder, in such a way that hot water (20) can pass through the pod cover (2) into the portioned pod (1; 30; 40; 50) and a beverage (22) can be discharged through the pod base (4) from the portioned pod (1; 30; 40; 50), and
- a portioned pod (1; 30; 40; 50) having a pod cover (2) and a pod base (4) and which is closed on all sides in its original state and contains a beverage substance (6), wherein the pod base (4) is configured to close again when or after the piercing means (18) associated with the pod base (4) is withdrawn from the pod base (4), and wherein the pod base (4) comprises a soft disc (14) and said soft disc (14) comprises a material selected from the following list: silicones, peroxide-free solid silicones, silicone rubbers, natural rubbers, rubbers, synthetic rubbers.

2. System according to claim 1, **characterised in that** the pod base is formed by the soft disc.

3. System according to claim 1, **characterised in that** the pod base comprises a film to which the soft disc is fixed.

4. System according to claim 1, **characterised in that** a base structure (8) and a side wall (10) of the portioned pod (1; 30; 40; 50) are formed in one piece, preferably as a moulded part or as a thermoformed part, and **in that** the soft disc (14) is fixed to the base structure (8).

5. System according to any one of claims 1 to 4, **characterised in that** the soft disc (14) is adhesively bonded or fused on.

6. System according to any one of claims 1 to 4, **characterised in that** the soft disc (14) is held by a holding structure (42, 46; 52).

7. System according to claim 6, **characterised in that** the holding structure comprises a support disc, preferably comprising a central opening and which holds the soft disc in place at the pod base.

8. System according to claim 6, **characterised in that** the holding structure comprises two support discs (42, 46), each of which preferably comprises a central opening (44, 48) between which the soft disc (14) is arranged, preferably in a clamped manner.

9. System according to any one of claims 6 to 8, **characterised in that** the holding structure (42, 46) is adhesively bonded and/or fused and/or screwed to a region of the portioned pod (40).

10. System according to any one of claims 6 to 8, **characterised in that** the holding structure (52) is locked to a region of the portioned pod (50).

11. System according to any one of claims 1 to 10, **characterised in that** the soft disc (14) is from 0.2 mm to 1.5 mm thick, preferably 0.5 mm thick.

12. System according to any one of claims 1 to 11, **characterised in that** the beverage substance (6) comprises a liquid, and/or **in that** solid portions of the beverage substance (6) are at least largely soluble or dispersible in water.

13. System according to claim 12, **characterised in that** the beverage substance (6) comprises at least one substance selected from the following list: cocoa powder, chocolate, cocoa liquid concentrate, powdered milk, liquid milk concentrate, instant soup.

14. Portioned pod comprising a pod cover (2) and a pod base (4), which portioned pod is closed on all sides in its original state and contains a beverage substance (6), the pod base (4) being configured so as to close again either when or after a piercing means (18) piercing through the pod base (4) is withdrawn from the pod base (4), **characterised in that** the pod base (4) comprises a soft disc (14), the soft disc (14) comprising a material selected from the following list: silicones, peroxide-free solid silicones, silicone rubbers, natural rubbers, rubbers, synthetic rubbers.

15. Portioned pod according to claim 14, **characterised in that** the pod base is formed by the soft disc.

16. Portioned pod according to claim 14, **characterised in that** the pod base comprises a film to which the soft disc is fixed.

17. Portioned pod according to claim 14, **characterised in that** a base structure (8) and a side wall (10) of the portioned pod (1; 30; 40; 50) are formed in one piece, preferably as a moulded part or as a thermoformed part, and **in that** the soft disc (14) is fixed to the base structure (8).

18. Portioned pod according to any one of claims 14 to 17, **characterised in that** the soft disc (14) is adhesively bonded or fused on.

19. Portioned pod according to any one of claims 14 to 17, **characterised in that** the soft disc (14) is held by a holding structure (42, 46; 52).

20. Portioned pod according claim 19, **characterised in that** the holding structure comprises a support disc, preferably having a central opening and which holds the soft disc in place at the pod base.

21. Portioned pod according claim 19, **characterised in that** the holding structure comprises two support discs (42, 46), each of which preferably has a central opening (44, 48), between which the soft disc (14) is arranged, preferably in a clamped manner.

22. Portioned pod according to any one of claims 19 to 21, **characterised in that** the holding structure (42, 46) is adhesively bonded and/or fused and/or screwed to a region of the portioned pod (40).

23. Portioned pod according to any one of claims 19 to 21, **characterised in that** the holding structure (52) is locked to a region of the portioned pod (50).

24. Portioned pod according to any one of claims 14 to 23, **characterised in that** the soft disc (14) is from 0.2 mm to 1.5 mm thick, preferably 0.5 mm thick.

25. Portioned pod according to any one of claims 14 to 24, **characterised in that** the beverage substance (6) comprises a liquid and/or **in that** solid portions of the beverage substance are at least largely soluble or dispersible in water.

26. Portioned pod according to claim 25, **characterised in that** the beverage substance (6) comprises at least one substance selected from the following list: cocoa powder, chocolate, cocoa liquid concentrate, powdered milk, liquid milk concentrate, instant soup.

## Revendications

1. Système comprenant :
- une machine chauffante,
qui est réglée pour fabriquer une boisson chaude au moyen d'une capsule de portion (1 ; 30 ; 40 ; 50) dotée d'un couvercle de capsule (2) et d'un fond de capsule (4) et comprend un appareil à eau pressurisée, un support de capsule de portion et une commande,
dans lequel deux moyens de perçage (16, 18) mobiles l'un par rapport à l'autre et étant associés au support de capsule de portion sont réglés pour perforer le couvercle de capsule (2) ainsi que le fond de capsule (4) à ou après l'insertion de la capsule de portion (1 ; 30 ; 40 ; 50) dans le support de capsule de portion, de sorte que de l'eau chaude (20) puisse parvenir à travers le couvercle de capsule (2) dans l'espace intérieur de la capsule de portion (1 ; 30 ; 40 ; 50) et une boisson (22) puisse parvenir à travers le fond de capsule (4) depuis la capsule de portion (1 ; 30 ; 40 ; 50), et
- une capsule de portion (1 ; 30 ; 40 ; 50),
comprenant un couvercle de capsule (2) et un fond de capsule (4), et qui est fermée de tous côtés à l'état livré et contient une substance pour boisson (6),
dans laquelle le fond de capsule (4) est réglé pour se refermer à ou après l'extraction du moyen de perçage (18) associé au fond de capsule (4) du fond de capsule (4)
dans laquelle le fond de capsule (4) comprend un disque en matière souple (14) et le disque en matière souple (14) comprenant un des matériaux sélectionnés parmi la liste suivante : silicone, silicone plein sans peroxyde, caoutchoucs silicone, gomme, caoutchoucs, caoutchoucs synthétiques.

2. Système selon la revendication 1, **caractérisé en ce que** le fond de capsule est formé par le disque en matière souple.

3. Système selon la revendication 1, **caractérisé en ce que** le fond de capsule comprend un film sur lequel est fixé le disque en matière souple.

4. Système selon la revendication 1, **caractérisé en ce qu'**une structure de fond (8) et une paroi latérale (10) de la capsule de portion (1 ; 30 ; 40 ; 50) sont conçues d'un seul tenant l'une avec l'autre, de préférence comme une pièce moulée par injection ou comme une pièce emboutie, et **en ce que** le disque en matière souple (14) est fixé sur la structure de fond (8).

5. Système selon l'une quelconque des revendications 1 à 4, **caractérisé en ce que** le disque en matière souple (14) est collé ou soudé.

6. Système selon l'une quelconque des revendications 1 à 4, **caractérisé en ce que** le disque en matière souple (14) est maintenu par une structure de maintien (42, 46 ; 52).

7. Système selon la revendication 6, **caractérisé en ce que** la structure de maintien comprend un disque de support, doté de préférence d'une ouverture centrale, maintenant le disque en matière souple sur le fond de capsule.

8. Système selon la revendication 6, **caractérisé en ce que** la structure de maintien comprend deux disques de support (42, 46), dotés de préférence respectivement d'une ouverture centrale (44, 48), et entre lesquels le disque en matière souple (14) est disposé, de préférence serré.

9. Système selon l'une quelconque des revendications 6 à 8, **caractérisé en ce que** la structure de maintien (42, 46) est collée et/ou soudée et/ou vissée à une zone de la capsule de portion (40).

10. Système selon l'une quelconque des revendications 6 à 8, **caractérisé en ce que** la structure de maintien (52) est enclenchée avec une zone de la capsule de portion (50).

11. Système selon l'une quelconque des revendications 1 à 10, **caractérisé en ce que** le disque en matière souple (14) présente une épaisseur dans la plage de 0,2 mm à 1,5 mm, de préférence de 0,5 mm.

12. Système selon l'une quelconque des revendications 1 à 11, **caractérisé en ce que** la substance pour boisson (6) comprend un liquide et/ou **en ce que** des composants fixes de la substance pour boisson (6) peuvent être au moins largement dissoutes et/ou dispersées dans l'eau.

13. Système selon la revendication 12, **caractérisé en ce que** la substance pour boisson (6) comprend au moins une des substances sélectionnées parmi la liste suivante : poudre de cacao, chocolat, cacao concentré, lait en poudre, lait concentré, soupe instantanée.

14. Capsule de portion, comprenant un couvercle de capsule (2) et un fond de capsule (4), et qui est fermée de tous côtés à l'état livré et contient une substance pour boisson (6), le fond de capsule (4) étant réglé pour se refermer à ou après l'extraction (4) d'un moyen de perçage (18) perçant le fond de capsule (4), du fond de capsule (4) **caractérisé en ce que** le fond de capsule (4) comprend un disque en matière souple (14), le disque en matière souple (14) comprenant un des matériaux sélectionnés parmi la liste suivante : silicone, silicone plein sans peroxyde, caoutchoucs silicone, gomme, caoutchoucs, caoutchoucs synthétiques.

15. Capsule de portion selon la revendication 14, **caractérisée en ce que** le fond de capsule est formé par le disque en matière souple.

16. Capsule de portion selon la revendication 14, **caractérisée en ce que** le fond de capsule comprend un film sur lequel est fixé le disque en matière souple.

17. Capsule de portion selon la revendication 14, **caractérisée en ce qu'**une structure de fond (8) et une paroi latérale (10) de la capsule de portion (1 ; 30 ; 40 ; 50) sont conçues d'un seul tenant l'une avec l'autre, de préférence comme une pièce moulée par injection ou comme une pièce emboutie, et **en ce que** le disque en matière souple (14) est fixé sur la structure de fond (8).

18. Capsule de portion selon l'une quelconque des revendications 14 à 17, **caractérisée en ce que** le disque en matière souple (14) est collé ou soudé.

19. Capsule de portion selon l'une quelconque des revendications 14 à 17, **caractérisée en ce que** le disque en matière souple (14) est maintenu par une structure de maintien (42, 46 ; 52).

20. Capsule de portion selon la revendication 19, **caractérisée en ce que** la structure de maintien comprend un disque de support, doté de préférence d'une ouverture centrale, maintenant le disque en matière souple sur le fond de capsule.

21. Capsule de portion selon la revendication 19, **caractérisée en ce que** la structure de maintien comprend deux disques de support (42, 46), dotés de préférence respectivement d'une ouverture centrale (44, 48), entre lesquels le disque en matière souple (14) est disposé, de préférence serré.

22. Capsule de portion selon l'une quelconque des revendications 19 à 21, **caractérisée en ce que** la structure de maintien (42, 46) est collée et/ou soudée et/ou vissée à une zone de la capsule de portion (40).

23. Capsule de portion selon l'une quelconque des revendications 19 à 21, **caractérisée en ce que** la structure de maintien (52) est enclenchée avec une zone de la capsule de portion (50).

24. Capsule de portion selon l'une quelconque des revendications 14 à 23, **caractérisée en ce que** le disque en matière souple (14) présente une épaisseur dans la plage de 0,2 mm à 1,5 mm, de préférence de 0,5 mm.

25. Capsule de portion selon l'une quelconque des revendications 14 à 24, **caractérisée en ce que** la substance pour boisson (6) comprend un liquide et/ou **en ce que** des composants fixes de la substance pour boisson peuvent être au moins largement dissoutes et/ou dispersées dans l'eau.

26. Capsule de portion selon la revendication 25, **caractérisée en ce que** la substance pour boisson (6) comprend au moins une des substances sélectionnées parmi la liste suivante : poudre de cacao, chocolat, cacao concentré, lait en poudre, lait concentré, soupe instantanée.
